# EUROPEAN PATENT APPLICATION

(11) **EP 4 641 786 A1**
(43) Date of publication of application: **29.10.2025**
(21) Application number: 23910346.8
(22) Date of filing: 21.12.2023
(51) Int. Cl.: H01M 50/209, H01M 50/264, H01M 50/258

(54) **BATTERY PACK AND ELECTRICAL APPARATUS**

(30) Priority: 28.12.2022 CN 202211698213
(71) Applicant: Xiamen Ampack Technology Limited, Xiamen City, Fujian Province 361000 (CN)
(72) Inventor: NONG, Wenbin, Xiamen, Fujian 361000 (CN); LI, Kunlong, Xiamen, Fujian 361000 (CN); WANG, Pengfei, Xiamen, Fujian 361000 (CN)
(74) Representative: Icosa
(86) International application number: PCT/CN2023/140746
(87) International publication number: WO 2024/140420

(57) **Abstract**

The present application relates to the technical field of batteries, and provides a battery pack and an electrical apparatus. The battery pack includes a housing, a cell module and a structural component. At least a portion of the cell module is accommodated within the housing, and the cell module includes a plurality of battery cells disposed in a stacked manner along a first direction. The structural component is arranged along the first direction with the cell module. The structural component includes a plurality of side walls, the plurality of side walls are sequentially disposed along the first direction with the cell module, a connecting portion is connected between every two adjacent side walls, a flexural modulus of each connecting portion is smaller than flexural moduli of two side walls connected to the connecting portion, the plurality of side walls include a first side wall and a second side wall, the first side wall is fixedly connected to the housing, and the second side wall is connected to the cell module. This battery pack may provide expansion space for the battery cells through the structural component, and may also constrain the expansion of the battery cells, thereby contributing to improving the use safety and service life of the battery pack.

## Description

### CROSS-REFERENCE TO RELATED APPLICATIONS

This application claims priority to Chinese Patent Application No. 202211698213.7 entitled "BATTERY PACK AND ELECTRICAL APPARATUS" filed on December 28, 2022, which is incorporated herein by reference in its entirety.

### TECHNICAL FIELD

This application relates to the technical field of batteries, and in particular, to a battery pack and an electrical apparatus.

### BACKGROUND

In recent years, secondary batteries have developed rapidly. With the increasing application of secondary batteries in various fields, secondary batteries are facing higher requirements in terms of safety and service life. The battery pack of a secondary battery has a plurality of battery cells, the battery cells are formed by assembling an electrode assembly (bare cell), then loading the electrode assembly into a shell, and finally injecting an electrolyte solution, where the electrode assembly is assembled by winding or laminating a positive electrode plate, a negative electrode plate and a separator. The battery cells of the battery pack in the prior art will expand after long-term use, which is not conducive to the use safety and service life of the battery pack.

### SUMMARY

Embodiments of this application provide a battery pack and an electrical apparatus, which is conducive to improving the use safety and service life of the battery pack.

In a first aspect, an embodiment of this application provides a battery pack, including a housing, a cell module and a structural component; at least a portion of the cell module is accommodated within the housing, the cell module includes a plurality of battery cells, and the plurality of battery cells are disposed in a stacked manner along a first direction; the structural component is arranged along the first direction with the cell module, where the structural component includes a plurality of side walls, the plurality of side walls are sequentially disposed along the first direction with the cell module, a connecting portion is connected between every two adjacent side walls, a flexural modulus of each connecting portion is smaller than flexural moduli of two side walls connected to the connecting portion, the plurality of side walls include a first side wall and a second side wall, the first side wall is connected to the housing, and the second side wall is connected to the cell module.

In the above technical solution, the structural component is disposed inside the battery pack, the structural component is arranged along the first direction with the cell module, the structural component is provided with the plurality of side walls, the first side wall and the second side wall of the plurality of side walls are respectively connected to the housing and the cell module, that is, the first side wall and the second side wall are respectively located at two ends of the structural component in the first direction, a connecting portion is disposed between every two adjacent side walls, and the flexural modulus of the connecting portion is smaller than the flexural moduli of the two side walls connected thereto, so that an anti-deformation ability of the connecting portion is smaller than an anti-deformation ability of a corresponding side wall. Therefore, when the battery cells of the cell module expand along the first direction, the connecting portion of the structural component deforms and collapses, and pressure along the first direction is provided for the cell module, so that the structural component not only provides certain expansion space for the battery cells, but also may constrain the expansion of the battery cells to a certain extent, which is conducive to compensating for the displacement deviation of the battery cells after expansion, reduce the phenomenon of rupture and damage of the battery cells caused by excessive expansion during use of the battery cells, and reduce the risk of sudden increase in internal pressure of the battery cells due to inability of the battery cells to expand, thus contributing to enhancing the service life and use safety of the battery pack. In addition, by disposing the collapsible and deformable structural component between the cell module and the housing, expansion space and pressurization requirements are provided for the battery cells of the cell module, which is conducive to reducing the use of foam between the battery cells, thus, on the one hand, contributing to saving the production materials required for the battery pack to reduce the production cost of the battery pack, and contributing to reducing the assembly difficulty of the battery pack to optimize the production process of the battery pack, and on the other hand, increasing the assembly tightness between the battery cells, which is conducive to enhancing the energy density of the battery pack.

In one or more embodiments, a flexural modulus of the housing is greater than flexural moduli of the side walls.

In the above technical solution, by setting the flexural modulus of the housing to be greater than the flexural moduli of the side walls, the anti-deformation ability of the housing is stronger than that of the structural component, in order to reduce deformation of the housing during use, which is conducive for the housing to improving the better stabilization and supporting effect for the structural component.

In one or more embodiments, a flexural modulus of the first side wall is greater than a flexural modulus of the second side wall.

In the above technical solution, by setting the flexural modulus of the first side wall to be greater than the flexural modulus of the second side wall, the anti-deformation ability of the first side wall is stronger than that of the second side wall, so that the first side wall connected to the housing improves better stabilization and support for the structural component, which is conducive to reducing the phenomenon that the structural component cannot provide pressure along the first direction for the cell module due to the deformation of the first side wall, and is conducive to improving the pressurizing effect of the structural component on the cell module.

In one or more embodiments, a thickness of the first side wall is greater than or equal to a thickness of the second side wall along the first direction.

In the above technical solution, by setting the thickness of the first side wall to be greater than or equal to the thickness of the second side wall in the first direction, the structural strength of the first side wall is achieved to be greater than or equal to the structural strength of the second side wall, so that the first side wall connected to the housing improves better stabilization and support for the structural component.

In one or more embodiments, a distance between the first side wall and the second side wall is greater than or equal to 10% of a length of the cell module along the first direction.

In the above technical solution, by setting the distance between the first side wall and the second side wall to be greater than or equal to 10% of the dimension of the cell module in the first direction, the distance between the first side wall and the second side wall in the first direction is greater than the maximum expansion amount of the cell module in the first direction, so that sufficient expansion space is achieved to be provided for the cell module when the structural component collapses and deforms along the first direction, in order to reduce the use safety hazards caused by insufficient expansion space of the battery cells.

In one or more embodiments, a number of the side walls is at least three, other side walls are located between the first side wall and the second side wall, the flexural modulus of the first side wall is greater than flexural moduli of the other side walls, and the flexural modulus of the second side wall is greater than the flexural moduli of the other side walls.

In the above technical solution, by setting the flexural modulus of the first side wall and the flexural modulus of the second side wall of the structural component to be greater than the flexural moduli of the other side walls of the structural component, and as the other side walls are located between the first side wall and the second side wall, the anti-deformation abilities of the first side wall and the second side wall located at two ends of the structural component in the first direction are greater than the anti-deformation abilities of the side walls located between the first side wall and the second side wall, achieving the preferential deformation of the side walls located between the first side wall and the second side wall to alleviate the phenomenon of deformation of the first side wall and the second side wall during use, which is conducive to enhancing the connection reliability between the first side wall and the housing, as well as the connection reliability between the second side wall and the cell module.

In one or more embodiments, the plurality of side walls further include a third side wall, and a distance between the first side wall and the third side wall is smaller than a distance between the third side wall and the second side wall along the first direction.

In the above technical solution, by disposing the third side wall between the first side wall and the second side wall, manufacturing is facilitated, and it is conducive to enhancing the overall structural stability of the structural component, in order to alleviate the phenomenon of lateral displacement and deformation along the direction perpendicular to the first direction during collapse and deformation of the structural component along the first direction. In addition, by setting the distance between the first side wall and the third side wall to be smaller than the distance between the third side wall and the second side wall, a region of the structural component located between the third side wall and the second side wall is more prone to collapse and deformation along the first direction, thereby alleviating the influence of the structural component on the first side wall during collapse and deformation, and thus contributing to the stability of the first side wall connected to the housing and enhancing the supporting effect of the first side wall on the other side walls.

In one or more embodiments, a distance between the second side wall and the third side wall is greater than or equal to 10% of the length of the cell module along the first direction.

In the above technical solution, by setting the distance between the second side wall and the third side wall to be greater than or equal to 10% of the dimension of the cell module in the first direction, the dimension of the region where the structural component is more prone to deformation is greater than the maximum expansion amount of the cell module in the first direction, so that sufficient expansion space is achieved to be provided for the cell module when the structural component collapses and deforms along the first direction, in order to reduce the use safety hazards caused by insufficient expansion space of the battery cells.

In one or more embodiments, the plurality of side walls further include a fourth side wall, and a distance between the third side wall and the fourth side wall is greater than the distance between the first side wall and the third side wall along the first direction; and/or the distance between the third side wall and the fourth side wall is greater than a distance between the fourth side wall and the second side wall along the first direction.

In the above technical solution, by disposing the fourth side wall between the third side wall and the second side wall, on the one hand, manufacturing is facilitated, and on the other hand, the overall structural stability of the structural component is further enhanced, which is conducive to alleviating the phenomenon of lateral displacement and deformation along the direction perpendicular to the first direction during the collapse and deformation of the structural component along the first direction. In addition, by setting the distance between the third side wall and the fourth side wall to be greater than the distance between the first side wall and the third side wall, a region of the structural component located between the third side wall and the fourth side wall is more prone to collapse and deformation along the first direction, alleviating the influence of the structural component on the first side wall during collapse and deformation, thus contributing to the stability of the first side wall connected to the housing and contributing to enhancing the supporting effect of the first side wall on other side walls. Similarly, by setting the distance between the third side wall and the fourth side wall to be greater than the distance between the fourth side wall and the second side wall, the region where the structural component is more prone to collapse and deformation is far away from the second side wall, which is conducive to reducing the influence of the structural component on the second side wall during collapse and deformation, and is thus conducive to the reliability of the interconnection between the second side wall and the cell module.

In one or more embodiments, a distance between the third side wall and the fourth side wall is greater than or equal to 10% of the length of the cell module along the first direction.

In the above technical solution, by setting the distance between the third side wall and the fourth side wall to be greater than or equal to 10% of the dimension of the cell module in the first direction, the dimension of the region where the structural component is more prone to deformation is greater than the maximum expansion amount of the cell module in the first direction, so that sufficient expansion space is achieved to be provided for the cell module when the structural component collapses and deforms along the first direction, in order to reduce the use safety hazards caused by insufficient expansion space of the battery cells.

In one or more embodiments, the plurality of side walls further include a fifth side wall, the fifth side wall is located between the third side wall and the fourth side wall, and a distance between the third side wall and the fifth side wall is greater than the distance between the first side wall and the third side wall along the first direction; and/or the distance between the third side wall and the fifth side wall is greater than a distance between the fourth side wall and the second side wall along the first direction.

In the above technical solution, by disposing the fifth side wall between the third side wall and the fourth side wall, manufacturing is facilitated, and it is conducive to further enhancing the overall structural stability of the structural component, which is conducive to alleviating the phenomenon of lateral displacement and deformation along the direction perpendicular to the first direction during the collapse and deformation of the structural component along the first direction. In addition, by setting the distance between the third side wall and the fifth side wall to be greater than the distance between the first side wall and the third side wall, a region of the structural component located between the third side wall and the fifth side wall is more prone to collapse and deformation along the first direction, thereby alleviating the influence of the structural component on the first side wall during collapse and deformation, which is thus conducive to improving the stability of the first side wall connected to the housing and enhancing the supporting effect of the first side wall on the other side walls. Similarly, by setting the distance between the third side wall and the fifth side wall to be greater than the distance between the fourth side wall and the second side wall, the region where the structural component is more prone to collapse and deformation is far away from the second side wall, which is conducive to reducing the influence of the structural component on the second side wall during collapse and deformation, and is thus conducive to improving the reliability of the interconnection between the second side wall and the cell module.

In one or more embodiments, a distance between the fourth side wall and the fifth side wall is greater than the distance between the first side wall and the third side wall along the first direction; and/or the distance between the fourth side wall and the fifth side wall is greater than the distance between the fourth side wall and the second side wall along the first direction.

In the above technical solution, by setting the distance between the fourth side wall and the fifth side wall to be greater than the distance between the first side wall and the third side wall, a region of the structural component located between the fourth side wall and the fifth side wall is more prone to collapse and deformation along the first direction, thereby alleviating the influence of the structural component on the first side wall during collapse and deformation, which is thus conducive to improving the stability of the first side wall connected to the housing and enhancing the supporting effect of the first side wall on the other side walls. Similarly, by setting the distance between the fourth side wall and the fifth side wall to be greater than the distance between the fourth side wall and the second side wall, the region where the structural component is more prone to collapse and deformation is far away from the second side wall, which is conducive to reducing the influence of the structural component on the second side wall during collapse and deformation, and is thus conducive to improving the reliability of the interconnection between the second side wall and the cell module.

In one or more embodiments, the battery pack further includes an insulator, and the insulator is disposed between the cell module and the structural component along the first direction.

In the above technical solution, the battery pack adopting this structure may play an insulating and isolating role for the cell module and the structural component, reducing the risk of a short circuit during use of the battery pack and thus contributing to enhancing the use safety of the battery pack.

In one or more embodiments, the insulator includes one of a rubber pad, a silicone pad or foam.

In the above technical solutions, the rubber pad, the silicone pad or the foam may play an insulating and isolating role for the cell module and the structural component, reducing the risk of a short circuit during use of the battery pack and thus contributing to enhancing the use safety of the battery pack.

In one or more embodiments, the cell module is plural in number, a plurality of cell modules are arranged along a second direction, the second direction is perpendicular to the first direction.

In one or more embodiments, the cell module is provided with the structural component on two sides in the first direction.

In one or more embodiments, the housing has two side plates arranged oppositely in the first direction, the cell module is disposed between the two side plates along the first direction, the structural component is disposed between a side plate and the cell module, and the structural component is connected to the side plate.

In one or more embodiments, the housing has a side plate in the first direction, the structural component is disposed on a side of the cell module facing away from the side plate in the first direction, and the first side wall is connected to the housing.

In the above technical solution, the structural component and the housing jointly define an assembly space for accommodating the cell module. The battery pack adopting this structure is convenient for a user to observe when the structural component is abnormally used, so as to facilitate maintenance of the battery pack.

In one or more embodiments, the structural component includes two first side walls and one second side wall, the two first side walls are arranged at intervals along the second direction, the second direction is perpendicular to the first direction, a connecting portion is connected between each first side wall and the second side wall, the connecting portion is disposed at an acute angle to the first side wall connected thereto, and the connecting portion is disposed at an acute angle to the second side wall.

In the above technical solution, the connecting portion is connected between each first side wall and the second side wall, and the connecting portion is disposed at an acute angle to both the first side wall and the second side wall, so that the structural component forms a shape similar to an "n"-shaped structure, and the structural component adopting this structure has better stability in use, so that the structural component stably collapses and deforms along the first direction when the battery cells of the cell module expand.

In one or more embodiments, the battery cells are prismatic cells or pouch cells.

Secondly, an embodiment of this application further provides an electrical apparatus including the battery pack described above.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope.
FIG. 1 is a schematic structural diagram of a battery pack according to some embodiments of this application;
FIG. 2 is an exploded structural diagram of the battery pack according to some embodiments of this application;
FIG. 3 is a top view of the battery pack (after removing a cover plate) according to some embodiments of this application;
FIG. 4 is a schematic structural diagram of a structural component according to some embodiments of this application;
FIG. 5 is a front view of the structural component according to some embodiments of this application;
FIG. 6 is a schematic structural diagram of the battery pack according to still some other embodiments of this application;
FIG. 7 is an exploded structural diagram of the battery pack according to still some other embodiments of this application;
FIG. 8 is a schematic assembly diagram of a cell module and the structural component according to some embodiments of this application;
FIG. 9 is a schematic assembly diagram of the cell module and the structural component according to some embodiments of this application in other embodiments of this application;
FIG. 10 is a schematic assembly diagram of the cell module and the structural component according to some embodiments of this application in some other embodiments of this application;
FIG. 11 is a front view of a structural component according to still some other embodiments of this application;
FIG. 12 is a schematic structural diagram of a structural component according to yet some other embodiments of this application;
FIG. 13 is a schematic structural diagram of a structural component according to some other embodiments of this application;
FIG. 14 is a schematic assembly diagram of the structural component and a cell module according to some other embodiments of this application;
FIG. 15 is a front view of the structural component according to still yet some other embodiments of this application;
FIG. 16 is a front view of the structural component according to still yet some other embodiments of this application; and
FIG. 17 is a schematic structural diagram of an electrical apparatus according to some embodiments of this application.

Reference numerals: 1000-electrical apparatus; 100-battery pack; 10-housing; 11-side plate; 20-cell module; 21-battery cell; 30-structural component; 31-side wall; 311-first side wall; 312-second side wall; 313-third side wall; 314-fourth side wall; 315-fifth side wall; 32-connecting portion; 40-cover plate; 50-insulator; X-first direction; Y-second direction; and Z-third direction.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application.

Unless otherwise defined, all technical and scientific terms used herein have the same meanings as normally understood by a person skilled in the technical field of this application. The terms used in the specification of this application are merely intended to describe specific embodiments but not to limit this application. The terms "include" and "contain" and any variations thereof used in the specification, claims, and brief description of drawings of this application are intended to cover a non-exclusive inclusion. The terms "first", "second", etc. in the specification and claims of this application or in the preceding drawings are used to distinguish between different objects, not to describe a specific sequence or order of precedence.

Reference to "embodiment(s)" in this application means that specific features, structures or characteristics described with reference to the embodiment(s) may be included in at least one embodiment of this application. Reference to this term in different places in the specification does not necessarily represent the same embodiment, nor does it represent an independent or alternative embodiment in a mutually exclusive relationship with other embodiments.

In the description of this application, it is hereby noted that, unless otherwise expressly specified and limited, terms "mount", "connected", "connect", "attach" and the like are to be understood in a broad sense, for example, it may be a fixed connection, or a detachable connection, or an integral connection; and it may be a direct connection or indirect connection through an intermediate medium, and may be the interior communication between two elements. For a person of ordinary skill in the art, the specific meaning of the forgoing terms in this application may be understood according to specific circumstances.

The term "and/or" in this application indicates merely a relation for describing the related objects, and represents three possible relationships. For example, A and/or B may represent the following three circumstances: A alone, both A and B, and B alone. In addition, the character "/" in this application generally indicates an "or" relationship between the front and back related objects.

In embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, the battery cells may be lithium-ion batteries, lithium-sulfur batteries, sodium-ion batteries, magnesium-ion batteries, etc., without being limited in embodiments of this application. The battery cells may be in cylindrical, flat, cuboidal, or other shapes, without being limited in embodiments of this application, either. The battery cells are generally divided into three types according to the form of packaging: cylindrical cells, prismatic cells and pouch cells, without being limited in embodiments of this application, either.

The battery pack mentioned in embodiments of this application refers to a single physical module that includes one or more battery cells to provide a higher voltage and capacity. The battery pack generally includes a housing for encapsulating one or more battery cells. The housing may prevent liquid or other foreign matter from affecting the charging or discharging of the battery cells.

A battery cell includes an electrode assembly and an electrolyte solution. The electrode assembly consists of a positive electrode plate, a negative electrode plate and a separator. The battery cell works primarily by relying on shuttling of metal ions between the positive electrode plate and the negative electrode platen. The positive electrode plate includes a positive current collector and a positive active material layer. The positive active material layer is coated on a surface of the positive current collector, and a portion of the positive current collector not coated with the positive active material layer serves as a positive tab to achieve electrical energy input or output of the positive electrode plate through the positive tab. Taking a lithium-ion battery as an example, a material of the positive current collector may be aluminum, and a positive active material may be lithium cobalt oxide, lithium iron phosphate, ternary lithium, or lithium manganate, etc. The negative electrode plate includes a negative current collector and a negative active material layer. The negative active material layer is coated on a surface of the negative current collector, and a portion of the negative current collector not coated with the negative active material layer serves as a negative tab to achieve electrical energy input or output of the negative electrode plate through the negative tab. A material of the negative current collector may be copper, and a negative active material may be carbon or silicon, etc. In order to pass a high current without fusing, the positive tab may be plural in a number and stacked together, and the negative tab may also be plural in a number and stacked together.

A material of the separator may be polypropylene (PP) or polyethylene (PE), etc. In addition, the electrode assembly may be of a jelly-roll structure and may also be of a stacked structure, without being limited in embodiments of this application.

The battery pack has outstanding advantages such as a high energy density, low environmental pollution, a high power density, a long service life, a wide application range, and a small self-discharge coefficient, which is an important component of the development of new energy today. The battery cells inside the battery pack are formed by assembling an electrode assembly (bare cell) then loading the electrode assembly into a shell, and finally injecting with an electrolyte solution, where the electrode assembly is assembled by winding or laminating a positive electrode plate, a negative electrode plate and a separator. However, with the continuous development of battery technology, higher requirements have been put forward for the use safety and service life of the battery pack. Therefore, the use safety and service life of the battery cells determine the safety performance and service life of the battery pack.

The applicant finds that for a general battery pack, the battery pack is usually provided with a housing and a cell module accommodated within the housing. The cell module includes a plurality of battery cells, the plurality of battery cells are stacked and disposed within the housing in an arrangement form. However, in the process of cyclic charging and discharging, the battery cells will expand. When the expansion of the battery cells is constrained, the internal pressure of the battery cells will suddenly increase, which will impair the performance of the battery cells. When the expansion of the battery cells is not constrained, it will cause excessive expansion of the battery cells, posing a risk of rupture and damage to the battery cells, which is not conducive to the use safety and service life of the battery pack.

In order to improve the use safety and service life of the battery pack, foam is usually disposed between two adjacent battery cells along the stacking direction of a plurality of battery cells in the prior art. On the one hand, certain expansion space is provided for the battery cells through the foam, and on the other hand, certain pressure is applied to the battery cells through the foam to constrain the expansion of the battery cells. However, in the battery pack of this structure, foam needs to be disposed between every two adjacent battery cells. As a result, on the one hand, the battery pack requires more foam and more materials, which is not conducive to reducing the production cost of the battery pack, and on the other hand, the processing process of the battery pack is cumbersome and the assembly is difficult, which is not conducive to optimizing the production process of the battery pack.

Based on the above considerations, in order to solve the problems of a high production cost and difficult assembly of the battery pack, the applicant conducts in-depth research and designs a battery pack. The battery pack includes a housing, a cell module and a structural component. At least a portion of the cell module is accommodated within the housing, the cell module includes a plurality of battery cells, and the plurality of battery cells are disposed in a stacked manner along a first direction. The structural component is arranged along the first direction with the cell module. The structural component includes a plurality of side walls, the plurality of side walls are sequentially disposed along the first direction with the cell module, a connecting portion is connected between every two adjacent side walls, a flexural modulus of each connecting portion is smaller than flexural moduli of two side walls connected to the connecting portion, the plurality of side walls include a first side wall and a second side wall, the first side wall is connected to the housing, and the second side wall is connected to the cell module.

In the battery pack of this structure, the structural component is arranged along the first direction with the cell module, the structural component is provided with the plurality of side walls, the first side wall and the second side wall of the plurality of side walls are respectively connected to the housing and the cell module, a connecting portion is disposed between every two adjacent side walls, and the flexural modulus of the connecting portion is smaller than the flexural moduli of the two side walls connected thereto, so that an anti-deformation ability of the connecting portion is smaller than an anti-deformation ability of a corresponding side wall. Therefore, when the battery cells of the cell module expand along the first direction, the connecting portion of the structural component deforms and collapses, and pressure along the first direction is provided for the cell module, so that the structural component not only provides certain expansion space for the battery cells, but also may constrain the expansion of the battery cells to a certain extent, which is conducive to compensating for the displacement deviation of the battery cells after expansion, thereby reducing the phenomenon of rupture and damage of the battery cells caused by excessive expansion during use of the battery cells, and reducing the risk of sudden increase in internal pressure of the battery cells due to inability of the battery cells to expand, thus contributing to enhancing the service life and use safety of the battery pack. In addition, by disposing the collapsible and deformable structural component between the cell module and the housing, expansion and pressurization requirements of the battery cells of the cell module are met, thereby reducing the use of foam between the battery cells, thus, on the one hand, contributing to saving the production materials required for the battery pack to reduce the production cost of the battery pack, and contributing to reducing the assembly difficulty of the battery pack to optimize the production process of the battery pack, and on the other hand, increasing the assembly tightness between the battery cells, which is conducive to enhancing the energy density of the battery pack.

The battery pack disclosed in the embodiment of this application may, but are not limited to, be used in an electrical apparatus such as an electric two-wheeler, an electric tool, an unmanned aerial vehicle, and an energy storage device. The power supply system of the electrical apparatus may be composed of a battery pack disclosed in this application, which is conducive to reducing the production cost of the battery pack, and is conducive to reducing the assembly difficulty of the battery pack, in order to optimize the production process of the battery pack.

An embodiment of this application provides an electrical apparatus using a battery pack as a power source. The electrical apparatus can be, but is not limited to, an electronic apparatus, an electric tool, an electric two-wheeler, an unmanned aerial vehicle, and an energy storage device. The electronic apparatus may include a mobile phone, a tablet, a laptop, etc., and the electric tool may include an electric drill, an electric saw, etc.

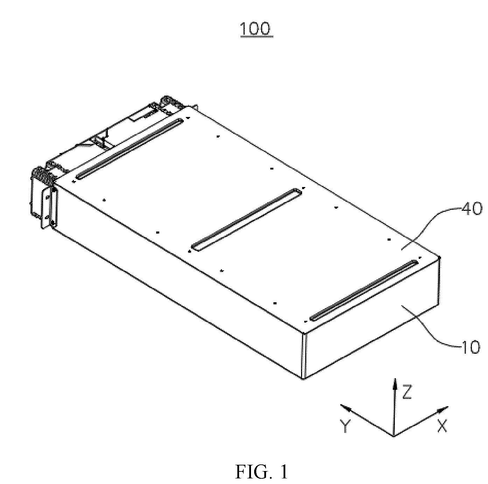

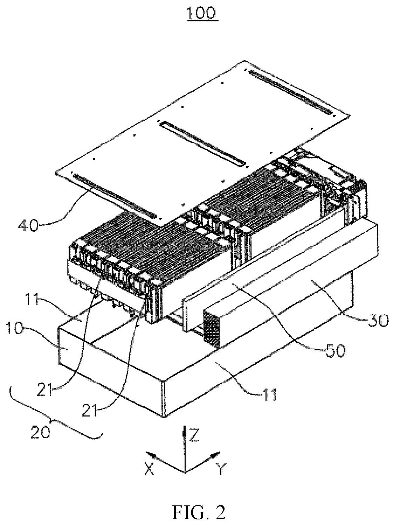

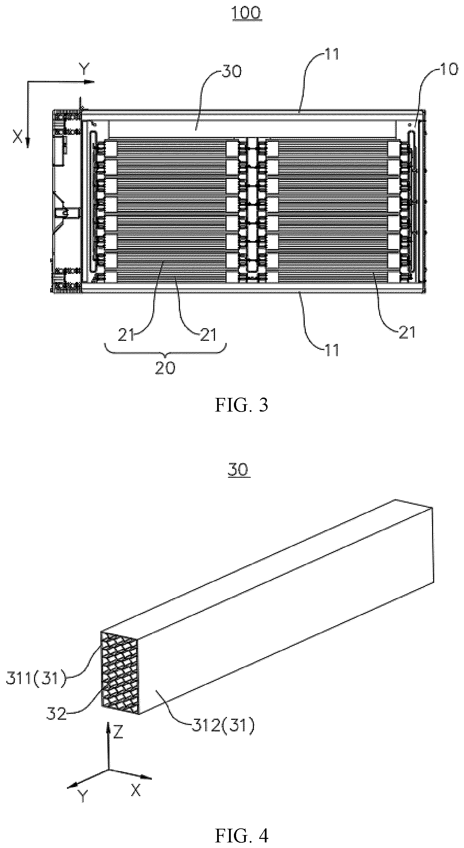

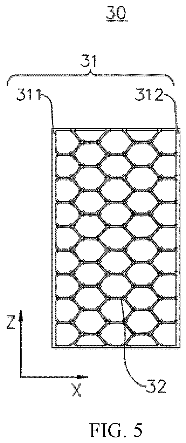

According to some embodiments of this application, referring to FIGS. 1 to 5, FIG. 1 is a schematic structural diagram of a battery pack 100 according to some embodiments of this application, FIG. 2 is an exploded structural diagram of the battery pack 100 according to some embodiments of this application, FIG. 3 is a top view of the battery pack 100 (after removing a cover plate 40) according to some embodiments of this application, FIG. 4 is a schematic structural diagram of a structural component 30 according to some embodiments of this application, and FIG. 5 is a front view of the structural component 30 according to some embodiments of this application. An embodiment of this application provides a battery pack 100, and the battery pack 100 includes a housing 10, a cell module 20 and a structural component 30. At least a portion of the cell module 20 is accommodated within the housing 10, the cell module 20 includes a plurality of battery cells 21, and the plurality of battery cells 21 are disposed in a stacked manner along a first direction X. The structural component 30 is arranged along the first direction with the cell module 20. The structural component 30 includes a plurality of side walls 31, the plurality of side walls 31 are sequentially disposed along the first direction X with the cell module 20, a connecting portion 32 is connected between every two adjacent side walls 31, a flexural modulus of each connecting portion 32 is smaller than flexural moduli of two side walls 31 connected to the connecting portion 32, the plurality of side walls 31 include a first side wall 311 and a second side wall 312, the first side wall 311 is connected to the housing 10, and the second side wall 312 is connected to the cell module 20.

The structural component 30 is accommodated within the housing 10, and the structural component 30 is disposed along the first direction X with the cell module 20, the structural component 30 is provided with the plurality of side walls 31, and the first side wall 311 and the second side wall 312 of the plurality of side walls 31 are respectively connected to the housing 10 and the cell module 20, the first side wall 311 and the second side wall 312 are respectively located at two ends of the structural component 30 in the first direction X, a connecting portion 32 is disposed between every two adjacent side walls 31, and the flexural modulus of the connecting portion 32 is smaller than the flexural moduli of the two side walls 31 connected thereto, so that an anti-deformation ability of the connecting portion 32 is smaller than an anti-deformation ability of a corresponding side wall 31. Therefore, when the battery cells 21 of the cell module 20 expand along the first direction X, the connecting portion 32 of the structural component 30 deforms and collapses, and pressure along the first direction X is provided for the cell module 20, so that the structural component 30 not only provides certain expansion space for the battery cells 21, but also may constrain the expansion of the battery cells 21 to a certain extent, effectively compensating for the displacement deviation of the battery cells 21 after expansion, thereby reducing the phenomenon of rupture and damage of the battery cells 21 caused by excessive expansion during use of the battery cells 21, and reducing the risk of sudden increase in internal pressure of the battery cells 21 due to inability of the battery cells 21 to expand, thus contributing to enhancing the service life and use safety of the battery pack 100. In addition, by disposing the collapsible and deformable structural component 30 between the cell module 20 and the housing 10, expansion and pressurization requirements of the battery cells 21 of the cell module 20 are met, thereby reducing the use of foam between the battery cells 21, thus, on the one hand, contributing to saving the production materials required for the battery pack 100 to reduce the production cost of the battery pack 100, and contributing to reducing the assembly difficulty of the battery pack 100 to optimize the production process of the battery pack 100, and on the other hand, increasing the assembly tightness between the battery cells 21 and the battery cells 21, which is conducive to enhancing the energy density of the battery pack 100.

The housing 10 is configured to provide assembly space for the cell module 20, and the housing 10 may adopt various structures, such as a cuboidal structure or a cylindrical structure. As an example, in FIG. 2, the housing 10 is a cuboidal structure.

Optionally, the battery pack 100 may further include the cover plate 40, the cover plate 40 and the housing 10 fit and cover each other, and the cover plate 40 and the housing 10 jointly define the assembly space for accommodating the cell module 20.

As an example, in FIG. 2, the housing 10 is a hollow structure with one end open to form the accommodation cavity for accommodating the cell module 20, the cover plate 40 is a plate-shaped structure, and the cover plate 40 fits and covers an open side of the housing 10, so that the cover plate 40 and the housing 10 jointly define the assembly space, and the cell module 20 is entirely accommodated within the housing 10. Of course, in other embodiments, the cell module 20 may be partially accommodated within the housing 10. For example, the cover plate 40 and the housing 10 are both hollow structures with one side open, and an open side of the cover plate 40 fits and covers the open side of the housing 10 to realize accommodation of a portion of the cell module 20 within the housing 10 and accommodation of another portion within the cover plate 40.

The housing 10 has two side plates 11 arranged oppositely in the first direction X, the plurality of battery cells 21 of the cell module 20 are disposed between the two side plates 11 in a stacked manner along the first direction X, the structural component 30 is disposed between a side plate 11 and the cell module 20 along the first direction X, and the structural component 30 is connected to the side plate 11.

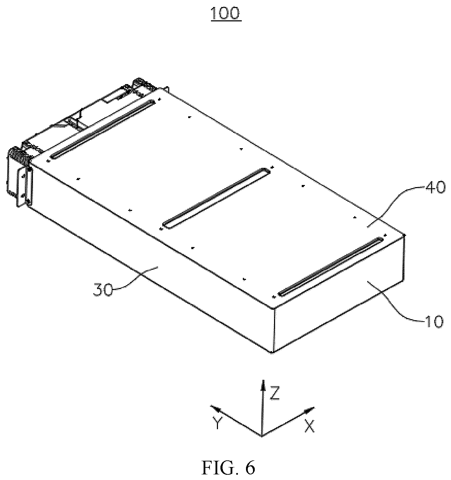

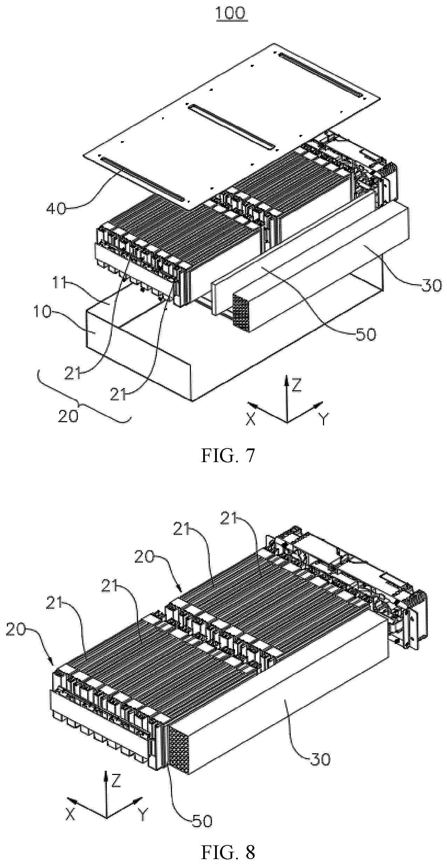

It is hereby noted that the structure of battery pack 100 may also be various. For example, referring to FIGS. 6 and 7, FIG. 6 is a schematic structural diagram of the battery pack 100 according to still some other embodiments of this application, and FIG. 7 is an exploded structural diagram of the battery pack 100 according to still some other embodiments of this application. The housing 10 is only provided with one side plate 11 in the first direction X, the structural component 30 is disposed on a side of the cell module 20 facing away from the side plate 11 in the first direction X, and two ends of the first side wall 311 in a second direction Y are respectively connected to the housing 10, so that the structural component 30 is connected to the housing 10, and the structural component 30 and the housing 10 jointly define the assembly space for accommodating the cell module 20. The battery pack 100 adopting this structure is convenient for a user to observe when the structural component 30 is abnormally used, so as to facilitate maintenance of the battery pack 100. In other embodiments, the housing 10 of the battery pack 100 may not be provided with the side plate 11 on two sides in the first direction X, that is, the housing 10 is a structure with two sides open in the first direction X. In these embodiments, the structural component 30 may be disposed on two sides of the cell module 20 in the first direction X, so that the two structural components 30 and the housing 10 jointly define the assembly space for accommodating the cell module 20.

In the cell module 20, the plurality of battery cells 21 may be connected in series or in parallel or in series and parallel, and connection in series and parallel refers to a combination of series connection and parallel connection between the plurality of battery cells 21. The plurality of battery cells 21 may be directly connected in series or in parallel or in series and parallel, and the cell module 20 composed of the plurality of battery cells 21 is accommodated within the housing 10. The cell module 20 may further include other structures. For example, the cell module 20 may further include a busbar component for achieving electrical connection between the plurality of battery cells 21.

Each battery cell 21 can be, but is not limited to, a lithium-sulfur battery, a sodium-ion battery or a magnesium-ion battery. The battery cell 21 may be in cylindrical, flat, cuboidal, or other shapes. As an example, in FIG. 1, the battery cell 21 is of a cuboidal structure.

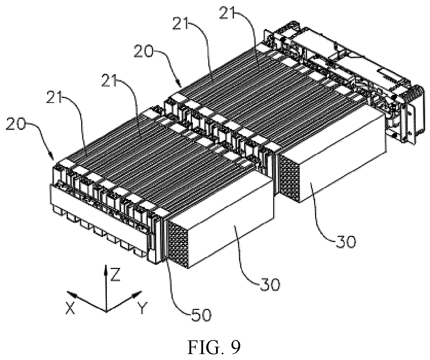

As an example, in FIGS. 2 and 3, the housing 10 of the battery pack 100 is provided with two cell modules 20, and the two cell modules 20 are arranged along the second direction Y, the second direction Y is perpendicular to the first direction X, and the cover plate 40 fits and covers a side of the housing 10 in a third direction Z. In other embodiments, the number of cell modules 20 may also be one, three, four, or five, etc. It is hereby noted that when there are a plurality of cell modules 20 disposed within the housing 10, the structural component 30 disposed between the cell modules 20 and one side plate 11 may be one or plural in number, as shown in FIG. 3, and please further refer to FIG. 8. FIG. 8 is a schematic assembly diagram of the cell module 20 and the structural component 30 according to some embodiments of this application. The plurality of cell modules 20 may share one structural component 30, that is, one structural component 30 is arranged between the plurality of cell modules 20 and one side plate 11. In other embodiments, the battery pack 100 may also have other structures, as shown in FIG. 9. FIG. 9 is a schematic assembly diagram of the cell module 20 and the structural component 30 according to some embodiments of this application in other embodiments of this application. Each cell module 20 may be provided with one corresponding structural component 30, that is, one structural component 30 is provided between each cell module 20 and one side plate 11.

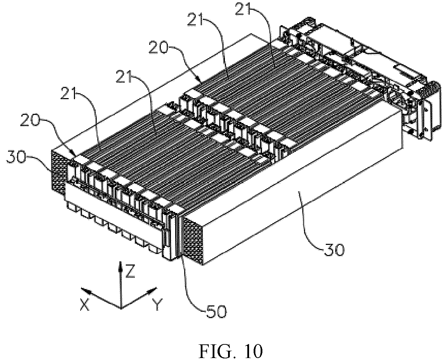

The structural component 30 and the cell module 20 are arranged along the first direction X, that is, at least one side of the cell module 20 is provided with the structural component 30 in the first direction X. It may be that one side of the cell module 20 in the first direction X is provided with the structural component 30, or that two sides of the cell module 20 in the first direction X are both provided with the structural component 30. It may be that the structural component 30 is provided between the cell module 20 and one side plates 11 of the two side plates 11 (as shown in FIG. 3), or the structural component 30 is provided between the cell module 20 and each of the two side plates 11. For example, in other embodiments, as shown in FIG. 10, which is a schematic assembly diagram of the cell module 20 and the structural component 30 according to some embodiments of this application in some other embodiments of this application, the structural component 30 may be provided between the cell module 20 and each of the two side plates 11, that is, the two sides of the cell module 20 in the first direction X are both provided with the structural component 30. One structural component 30, the cell module 20 and another structural component 30 are sequentially arranged along the first direction X.

In embodiments of this application, the flexural modulus refers to the ability to resist bending deformation within the elastic limit by the ratio of the bending stress to the strain generated by bending.

A connecting portion 32 is connected between every two adjacent side walls 31, and the flexural modulus of each connecting portion 32 is smaller than the flexural moduli of the two side walls 31 connected to the connecting portion 32. The anti-deformation ability of the connecting portion 32 connected between two adjacent side walls 31 is smaller than the anti-deformation ability of corresponding two side walls 31. This makes it easier for the connecting portion 32 to deform compared with the corresponding two side walls 31 when the structural component 30 is subjected to the expansion force of the cell module 20 in the first direction X, thereby achieving the collapse and deformation of the structural component 30 along the first direction X and applying pressure along the first direction X to the cell module 20. That is, during the use of the battery pack 100, the battery cells 21 of the core module 20 expand along the first direction X due to charging and discharging, while the structural component 30 collapses and deforms along the first direction X under the expansion force of the battery cells 21, thereby providing expandable space for the battery cells 21, and conversely, the reaction force generated by the collapse and deformation of the structural component 30 acts on the battery cells 21, thereby exerting pressurization and restriction on the battery cells 21 of the cell module 20.

Optionally, the material of the structural component 30 may be various, such as a metal material or a polymer synthetic material. As an example, in an embodiment of this application, the material of the structural component 30 is a metal material, such as aluminum or aluminum alloy. Adopting a metal material in the structural component 30 is beneficial for improving the toughness of the structural component 30 in the event of collapse and deformation, so that the structural component 30 may provide relatively stable pressure for the cell module 20 along the first direction X, thereby contributing to enhancing the pressurizing effect of the structural component 30 on the cell module 20.

Similarly, the side walls 31 of the structural component 30 may be plural in number, such as two, three, four, five, or six. As an example, in FIG. 5, the number of the side walls 31 of the structural component 30 is two.

The structural component 30 includes the plurality of side walls 31, and the plurality of side walls 31 are sequentially disposed along the first direction X with the cell module 20. The plurality of side walls 31 include the first side wall 311 and the second side wall 312, and the first side wall 311 and the second side wall 312 are respectively connected to the housing 10 and the cell module 20. That is, the structural component 30 includes at least two side walls 31, the two side walls 31 are the first side wall 311 and the second side wall 312, and the first side wall 311 and the second side wall 312 are respectively located at two ends of a plurality of side walls 31 in the first direction X.

The connecting portion 32 is connected between every two adjacent side walls 31, that is, every two adjacent side walls 31 are connected by the connecting portion 32 in the first direction X. Optionally, the number of the connecting portion 32 connected between two adjacent side walls 31 may be one, two, three, four, five, or six, etc. As an example, in FIG. 5, the connecting portion 32 connected between two adjacent side walls 31 is one, and the cross section of the connecting portion 32 is honeycomb-shaped.

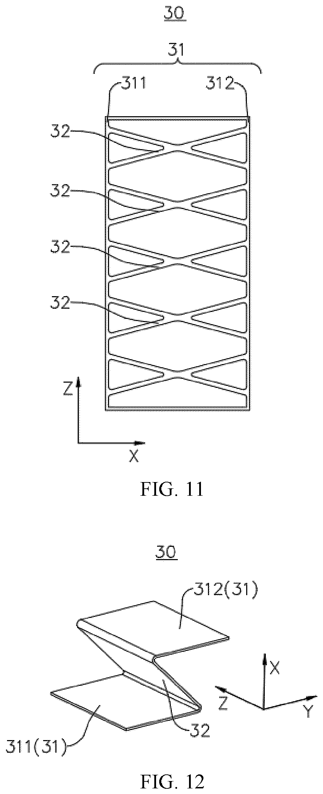

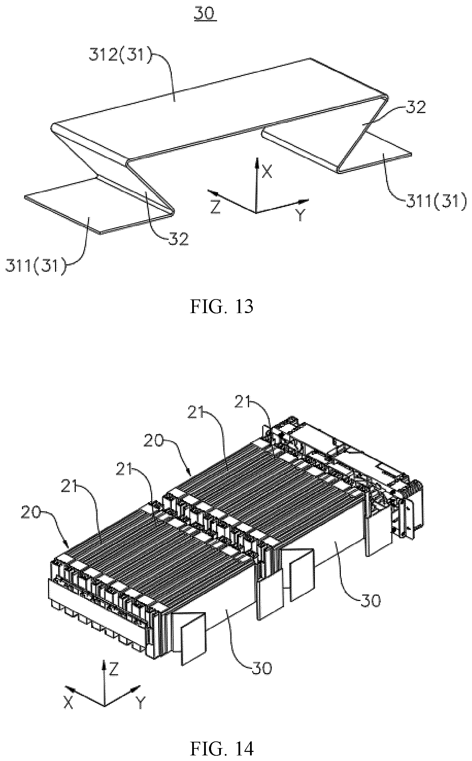

It is hereby noted that in other embodiments, the structural component 30 may also be of other structures. For example, as shown in FIG. 11, which is a front view of the structural component 30 provided according to still some other embodiments of this application, the connecting portion 32 connected between two adjacent side walls 31 is plural in number. A plurality of connecting portions 32 are arranged along the third direction Z, and the cross section of the connecting portion 32 is "X"-shaped. Of course, the structure of the connecting portions 32 may also be various, such as an "S"-shaped, "M"-shaped or plate-shaped cross section of the connecting portions 32. For another example, referring to FIG. 12, which is a schematic structural diagram of the structural component 30 according to yet some other embodiments of this application, the connecting portion 32 may also be of a plate-shaped structure disposed between the two side walls 31, and the connecting portion 32 is disposed at an acute angle with the two side walls 31, so that the structural component 30 is in a "Z"-shaped spring structure as a whole. Similarly, in an embodiment where the connecting portion 32 is a plate-shaped structure, the structural component 30 may also be of other structures, as shown in FIGS. 13 and 14. FIG. 13 is a schematic structural diagram of the structural component 30 according to some other embodiments of this application, and FIG. 14 is a schematic assembly diagram of the structural component 30 and the cell module 20 according to some other embodiments of this application. The structural component 30 includes one second side wall 312 and two first side walls 311, and the two first side walls 311 are arranged at intervals along the second direction Y. One connecting portion 32 is connected between each first side wall 311 and the second side wall 312, and the connecting portion 32 is disposed at an acute angle to both the first side wall 311 and the second side wall 312, so that the structural component 30 forms a shape similar to an "n"-shaped structure, and the structural component 30 adopting this structure has better stability in use, so that the structural component 30 stably collapses and deforms along the first direction when the battery cells 21 of the cell module 20 expand.

Optionally, the molding method of the structural component 30 may be various. For example, structural component 30 may be made through processes such as casting, stamping or extrusion molding.

The first side wall 311 is connected to the housing 10, and the connecting method between the first side wall 311 and the housing 10 may be various, such as welding, bonding, clamping, or bolt screwing. Similarly, the second side wall 312 is connected to the cell module 20. In an embodiment of this application, the second side wall 312 and the cell module 20 abut on each other along the first direction X. It is hereby noted that the second side wall 312 and the cell module 20 may be in a direct abutting relationship or an indirect abutting relationship. That is, other components may also be disposed between the second side wall 312 and the cell module 20.

In some embodiments, as shown in FIGS. 2 and 8, the battery pack 100 may further include an insulator 50. The insulator 50 is disposed between the cell module 20 and the structural component 30 along the first direction X to separate the cell module 20 and the structural component 30. The battery pack 100 adopting this structure may play an insulating and isolating role for the cell module 20 and structural components 30, reducing the risk of a short circuit during use of the battery pack 100 and thus contributing to enhancing the use safety of the battery pack 100.

The insulator 50 may be various. For example, the insulator 50 is a rubber pad, silicone pad or plastic pad disposed between the cell module 20 and the structural component 30 to play an insulating and isolating role for the cell module 20 and the structural component 30. Of course, the insulator 50 may also be foam disposed between the cell module 20 and the structural component 30, which not only insulates and isolates the cell module 20 from the structural component 30, but also provides a certain buffering effect between the cell module 20 and the structural component 30.

According to some embodiments of this application, the flexural modulus of the housing 10 is greater than the flexural moduli of the side walls 31.

By setting the flexural modulus of the housing 10 to be greater than the flexural moduli of the side walls 31, the anti-deformation ability of the housing 10 is stronger than that of the structural component 30, in order to reduce deformation of the housing 10 during use, which is conducive for the housing 10 to improving the better stabilization and supporting effect for the structural component 30.

According to some embodiments of this application, as shown in FIGS. 4 and 5, the flexural modulus of the first side wall 311 is greater than the flexural modulus of the second side wall 312. The anti-deformation ability of the structural component 30 connected to the first side wall 311 of the housing 10 is greater than the anti-deformation ability of the structural component 30 abutting on the second side wall 312 of the cell module 20.

By setting the flexural modulus of the first side wall 311 to be greater than the flexural modulus of the second side wall 312, the anti-deformation ability of the first side wall 311 is stronger than that of the second side wall 312, so that the first side wall 311 connected to the housing 10 improves better stabilization and support for the structural component 30, which is conducive to reducing the phenomenon that the structural component 30 cannot provide pressure along the first direction X for the cell module 20 due to deformation of the first side wall 311, and improving the pressurizing effect of the structural component 30 on the cell module 20.

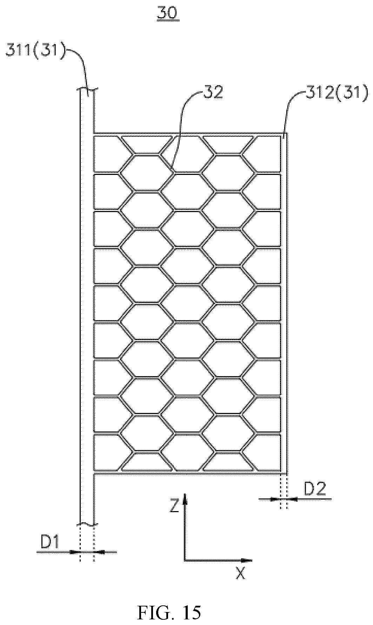

According to some embodiments of this application, as shown in FIG. 15, which is a front view of the structural component 30 according to still yet some other embodiments of this application, the thickness of the first side wall 311 is greater than or equal to the thickness of the second side wall 312 along the first direction X.

In FIG. 15, the thickness of the first side wall 311 in the first direction X is D₁, and the thickness of the second side wall 312 in the first direction X is D₂, with D₁ ≥ D₂.

By setting the thickness of the first side wall 311 to be greater than or equal to the thickness of the second side wall 312 in the first direction X, the structural strength of the first side wall 311 is achieved to be greater than or equal to the structural strength of the second side wall 312, so that the first side wall 311 connected to the housing 10 improves better stabilization and support for the structural component 30.

In some embodiments, as shown in FIGS. 5 and 8, the distance between the first side wall 311 and the second side wall 312 is greater than or equal to 10% of the length of the cell module 20 along the first direction X. That is, the distance between the first side wall 311 and the second side wall 312 is greater than or equal to 10% of the dimension of the cell module 20 in the first direction X, that is, the distance between the first side wall 311 and the second side wall 312 is greater than or equal to 10% of the overall thickness of the plurality of battery cells 21 after being stacked in the first direction X.

By setting the distance between the first side wall 311 and the second side wall 312 to be greater than or equal to 10% of the dimension of the cell module 20 in the first direction X, the distance between the first side wall 311 and the second side wall 312 in the first direction X is greater than the maximum expansion amount of the cell module 20 in the first direction X, so that sufficient expansion space is achieved to be provided for the cell module 20 when the structural component 30 collapses and deforms along the first direction X, in order to reduce the use safety hazards caused by insufficient expansion space of the battery cells 21.

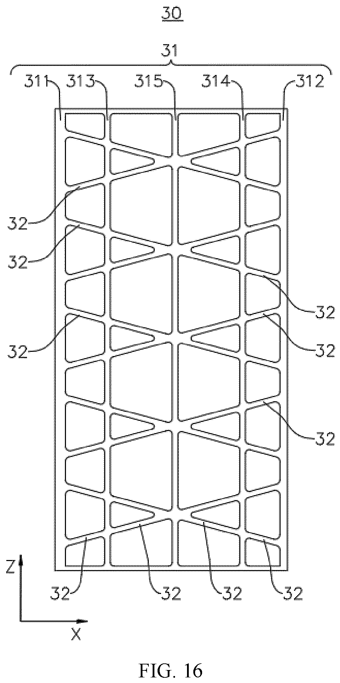

According to some embodiments of this application, referring to FIG. 16, FIG. 16 is a front view of the structural component 30 according to still yet some other embodiments of this application. The number of the side walls 31 is at least three, and other side walls 31 are located between the first side wall 311 and the second side wall 312. The flexural modulus of the first side wall 311 is greater than the flexural moduli of the other side walls 31, and the flexural modulus of the second side wall 312 is greater than the flexural moduli of the other side walls 31.

The number of the side walls 31 is at least three, that is, the number of the side walls 31 of the structural component 30 may be three, four, five, or six, etc. As an example, in FIG. 16, the number of the side walls 31 of the structural component 30 is five, that is, three side walls 31 are sequentially disposed between the first side wall 311 and the second side wall 312.

By setting the flexural modulus of the first side wall 311 and the flexural modulus of the second side wall 312 of the structural component 30 to be greater than the flexural moduli of the other side walls 31 of the structural component 30, and as the other side walls 31 are located between the first side wall 311 and the second side wall 312, the anti-deformation abilities of the first side wall 311 and the second side wall 312 located at two ends of the structural component 30 in the first direction X are greater than the anti-deformation abilities of the side walls 31 located between the first side wall 311 and the second side wall 312, achieving the preferential deformation of the side walls 31 located between the first side wall 311 and the second side wall 312 to alleviate the phenomenon of deformation of the first side wall 311 and the second side wall 312 during use, which is conducive to enhancing the connection reliability between the first side wall 311 and the housing 10, as well as the connection reliability between the second side wall 312 and the cell module 20.

According to some embodiments of this application, as shown in FIG. 16, the plurality of side walls 31 further include a third side wall 313, and the third side wall 313 is located between the first side wall 311 and the second side wall 312 along the first direction X. That is, the first side wall 311, the third side wall 313, the second side wall 312, and the cell module 20 are sequentially arranged along the first direction X.

By disposing the third side wall 313 between the first side wall 311 and the second side wall 312, manufacturing is facilitated, it is conducive to enhancing the overall structural stability of the structural component 30, and it is conducive to alleviating the phenomenon of lateral displacement and deformation along the direction perpendicular to the first direction X during the collapse and deformation of the structural component 30 along the first direction X.

The distance between the first side wall 311 and the third side wall 313 is smaller than the distance between the third side wall 313 and the second side wall 312 along the first direction X.

By setting the distance between the first side wall 311 and the third side wall 313 to be smaller than the distance between the third side wall 313 and the second side wall 312, a region of the structural component 30 located between the third side wall 313 and the second side wall 312 is more prone to collapse and deformation along the first direction X, thereby alleviating the influence of the structural component 30 on the first side wall 311 during collapse and deformation, and thus contributing to the stability of the first side wall 311 connected to the housing 10 and enhancing the supporting effect of the first side wall 311 on the other side walls 31.

In some embodiments, the distance between the second side wall 312 and the third side wall 313 is greater than or equal to 10% of the length of the cell module 20 along the first direction X. That is, the distance between the second side wall 312 and the third side wall 313 is greater than or equal to 10% of the dimension of the cell module 20 in the first direction X, that is, the distance between the second side wall 312 and the third side wall 313 is greater than or equal to 10% of the overall thickness of the plurality of battery cells 21 after being stacked in the first direction X.

In actual use, the maximum expansion amount of each battery cell 21 is about 8% of the thickness of the battery cell 21. Therefore, by disposing the distance between the second side wall 312 and the third side wall 313 to be greater than or equal to 10% of the dimension of the cell module 20 in the first direction X, the dimension of the region of the structural component 30 being more prone to deformation is greater than the maximum expansion amount of the cell module 20 in the first direction X, so that sufficient expansion space is achieved to be provided for the cell module 20 when the structural component 30 collapses and deforms along the first direction X, in order to reduce the use safety hazards caused by insufficient expansion space of the battery cells 21.

According to some embodiments of this application, as shown in FIG. 16, the plurality of side walls 31 further include a fourth side wall 314, the fourth side wall 314 is located between the third side wall 313 and the second side wall 312 along the first direction X. That is, the first side wall 311, the third side wall 313, the fourth side wall 314, the second side wall 312, and the cell module 20 are sequentially arranged along the first direction X.

By disposing the fourth side wall 314 between the third side wall 313 and the second side wall 312, on the one hand, manufacturing is facilitated, and on the other hand, the overall structural stability of the structural component 30 is further improved, which is conducive to alleviating the phenomenon of lateral displacement and deformation along the direction perpendicular to the first direction X during the collapse and deformation of the structural component 30 along the first direction X.

The distance between the third side wall 313 and the fourth side wall 314 is greater than the distance between the first side wall 311 and the third side wall 313 along the first direction X; and/or the distance between the third side wall 313 and the fourth side wall 314 is greater than the distance between the fourth side wall 314 and the second side wall 312 along the first direction X.

By setting the distance between the third side wall 313 and the fourth side wall 314 to be greater than the distance between the first side wall 311 and the third side wall 313, a region of the structural component 30 located between the third side wall 313 and the fourth side wall 314 is more prone to collapse and deformation along the first direction X, thereby alleviating the influence of the structural component 30 on the first side wall 311 during collapse and deformation, which is thus conducive to enhancing the stability of the first side wall 311 connected to the housing 10, and is conducive to enhancing the supporting effect of the first side wall 311 on the other side walls 31. Similarly, by setting the distance between the third side wall 313 and the fourth side wall 314 to be greater than the distance between the fourth side wall 314 and the second side wall 312, the region of the structural component 30 being more prone to collapse and deformation is far away from the second side wall 312, which is conducive to reducing the influence of the structural component 30 on the second side wall 312 during collapse and deformation, and is thus conducive for the reliability of the interconnection between the second side wall 312 and the cell module 20.

In some embodiments, the distance between the third side wall 313 and the fourth side wall 314 is greater than or equal to 10% of the length of the cell module 20 along the first direction X. That is, the distance between the third side wall 313 and the fourth side wall 314 is greater than or equal to 10% of the dimension of the cell module 20 in the first direction X, that is, the distance between the third side wall 313 and the fourth side wall 314 is greater than or equal to 10% of the overall thickness of the plurality of battery cells 21 after being stacked in the first direction X.

By setting the distance between the third side wall 313 and the fourth side wall 314 to be greater than or equal to 10% of the dimension of the cell module 20 in the first direction X, the dimension of the region of the structural component 30 being more prone to deformation is greater than the maximum expansion amount of the cell module 20 in the first direction X, so that sufficient expansion space is achieved to be provided for the cell module 20 when the structural component 30 collapses and deforms along the first direction X, in order to reduce the use safety hazards caused by insufficient expansion space of the battery cells 21.

According to some embodiments of this application, as shown in FIG. 16, the plurality of side walls 31 further include a fifth side wall 315, the fifth side wall 315 is located between the third side wall 313 and the fourth side wall 314 along the first direction X. That is, the first side wall 311, the third side wall 313, the fifth side wall 315, the fourth side wall 314, the second side wall 312, and the cell module 20 are sequentially arranged along the first direction X.

By disposing the fifth side wall 315 between the third side wall 313 and the fourth side wall 314, manufacturing is facilitated, and the overall structural stability of the structural component 30 is further enhanced, which is conducive to alleviating the phenomenon of lateral displacement and deformation along the direction perpendicular to the first direction X during the collapse and deformation of the structural component 30 along the first direction X.

Optionally, the distance between the third side wall 313 and the fifth side wall 315 is greater than the distance between the first side wall 311 and the third side wall 313 along the first direction X; and/or the distance between the third side wall 313 and the fifth side wall 315 is greater than the distance between the fourth side wall 314 and the second side wall 312 along the first direction X.

By setting the distance between the third side wall 313 and the fifth side wall 315 to be greater than the distance between the first side wall 311 and the third side wall 313, a region of the structural component 30 located between the third side wall 313 and the fifth side wall 315 is more prone to collapse and deformation along the first direction X, thereby alleviating the influence of the structural component 30 on the first side wall 311 during collapse and deformation, which is thus conducive for the stability of the first side wall 311 connected to the housing 10, and enhancing the supporting effect of the first side wall 311 on the other side walls 31. Similarly, by setting the distance between the third side wall 313 and the fifth side wall 315 to be greater than the distance between the fourth side wall 314 and the second side wall 312, the region of the structural component 30 being more prone to collapse and deformation is far away from the second side wall 312, which is conducive to reducing the influence of the structural component 30 on the second side wall 312 during collapse and deformation, and is thus conducive for the reliability of the interconnection between the second side wall 312 and the cell module 20.

Optionally, the distance between the fourth side wall 314 and the fifth side wall 315 is greater than the distance between the first side wall 311 and the third side wall 313 along the first direction X; and/or the distance between the fourth side wall 314 and the fifth side wall 315 is greater than the distance between the fourth side wall 314 and the second side wall 312 along the first direction X.

By setting the distance between the fourth side wall 314 and the fifth side wall 315 to be greater than the distance between the first side wall 311 and the third side wall 313, a region of the structural component 30 located between the fourth side wall 314 and the fifth side wall 315 is more prone to collapse and deformation along the first direction X, thereby alleviating the influence of the structural component 30 on the first side wall 311 during collapse and deformation, which is thus conducive for the stability of the first side wall 311 connected to the housing 10, and enhancing the supporting effect of the first side wall 311 on the other side walls 31. Similarly, by setting the distance between the fourth side wall 314 and the fifth side wall 315 to be greater than the distance between the fourth side wall 314 and the second side wall 312, the region of the structural component 30 being more prone to collapse and deformation is far away from the second side wall 312, which is conducive to reducing the influence of the structural component 30 on the second side wall 312 during collapse and deformation, and is thus conducive for the reliability of the interconnection between the second side wall 312 and the cell module 20.

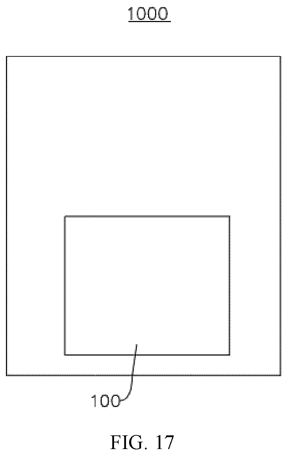

According to some embodiments of this application, referring to FIG. 1, and further referring to FIG. 17, which is a schematic structural diagram of an electrical apparatus 1000 according to some embodiments of this application, an embodiment of this application further provides an electrical apparatus 1000 including the battery pack 100 according to any one of the above solutions, and the battery pack 100 is configured to provide electrical energy for the electrical apparatus 1000.

The electrical apparatus 1000 may be any apparatus or system that applies one of the aforementioned battery packs 100.

It is hereby noted that to the extent that no conflict occurs, the embodiments of this application and the features in the embodiments may be combined with each other.

The above are only preferred embodiments of this application and are not intended to limit this application. For a person skilled in the art, this application may have various modifications and variations. Any modifications, equivalent substitutions, improvements, etc. made within the spirit and principles of this application shall be included within the scope of protection of this application.

## Claims

1. A battery pack, comprising:
a housing;
a cell module at least partially accommodated within the housing, wherein the cell module comprises a plurality of battery cells, and the plurality of battery cells are disposed in a stacked manner along a first direction; and
a structural component arranged along the first direction with the cell module,
wherein the structural component comprises a plurality of side walls, the plurality of side walls are sequentially disposed along the first direction with the cell module, a connecting portion is connected between every two adjacent side walls, a flexural modulus of each connecting portion is smaller than flexural moduli of the two adjacent side walls connected to the connecting portion, the plurality of side walls comprise a first side wall and a second side wall, the first side wall is connected to the housing, and the second side wall is connected to the cell module.

2. The battery pack according to claim 1, wherein a flexural modulus of the housing is greater than flexural moduli of the side walls.

3. The battery pack according to claim 1 or 2, wherein
a flexural modulus of the first side wall is greater than a flexural modulus of the second side wall.

4. The battery pack according to any one of claims 1 to 3, wherein
along the first direction, a thickness of the first side wall is greater than or equal to a thickness of the second side wall.

5. The battery pack according to any one of claims 1 to 4, wherein
along the first direction, a distance between the first side wall and the second side wall is greater than or equal to 10% of a length of the cell module.

6. The battery pack according to any one of claims 1 to 5, wherein
the plurality of side walls include at least three the side walls, other side walls are located between the first side wall and the second side wall, the flexural modulus of the first side wall is greater than flexural moduli of the other side walls, and the flexural modulus of the second side wall is greater than the flexural moduli of the other side walls.

7. The battery pack according to claim 6, wherein
the other side walls further comprise a third side wall; and along the first direction, a distance between the first side wall and the third side wall is smaller than a distance between the third side wall and the second side wall.

8. The battery pack according to claim 7, wherein
along the first direction, a distance between the second side wall and the third side wall is greater than or equal to 10% of the length of the cell module.

9. The battery pack according to claim 7 or 8, wherein
the other side walls further comprise a fourth side wall; and
along the first direction, a distance between the third side wall and the fourth side wall is greater than the distance between the first side wall and the third side wall, and/or
along the first direction, the distance between the third side wall and the fourth side wall is greater than a distance between the fourth side wall and the second side wall.

10. The battery pack according to claim 9, wherein
along the first direction, a distance between the third side wall and the fourth side wall is greater than or equal to 10% of the length of the cell module.

11. The battery pack according to claim 9 or 10, wherein
the other side walls further comprise a fifth side wall, the fifth side wall is located between the third side wall and the fourth side wall; and
along the first direction, a distance between the third side wall and the fifth side wall is greater than the distance between the first side wall and the third side wall, and/or
along the first direction, the distance between the third side wall and the fifth side wall is greater than the distance between the fourth side wall and the second side wall.

12. The battery pack according to claim 11, wherein
along the first direction, a distance between the fourth side wall and the fifth side wall is greater than the distance between the first side wall and the third side wall; and/or
along the first direction, the distance between the fourth side wall and the fifth side wall is greater than the distance between the fourth side wall and the second side wall.

13. The battery pack according to any one of claims 1 to 12, wherein
the battery pack further comprises an insulator, and along the first direction, the insulator is disposed between the cell module and the structural component.

14. The battery pack according to claim 13, wherein the insulator comprises one of a rubber pad, a silicone pad or foam.

15. The battery pack according to any one of claims 1 to 14, wherein
the battery pack includes a plurality of the cell modules, the plurality of cell modules are arranged along a second direction, the second direction is perpendicular to the first direction.

16. The battery pack according to any one of claims 1 to 15, wherein the cell module is provided with the structural component on two sides in the first direction.

17. The battery pack according to any one of claims 1 to 16, wherein
the housing has two side plates arranged oppositely in the first direction; along the first direction, the cell module is disposed between the two side plates; the structural component is disposed between one side plate and the cell module; and the structural component is connected to the side plate.

18. The battery pack according to any one of claims 1 to 15, wherein
the housing has a side plate in the first direction, the structural component is disposed on a side of the cell module facing away from the side plate in the first direction, and the first side wall is connected to the housing.

19. The battery pack according to any one of claims 1 to 18, wherein
the structural component comprises two first side walls and one second side wall, the two first side walls are arranged at intervals along the second direction, the second direction is perpendicular to the first direction, a connecting portion is connected between each first side wall and the second side wall, the connecting portion is disposed at an acute angle to the first side wall connected thereto, and the connecting portion is disposed at an acute angle to the second side wall.

20. The battery pack according to any one of claims 1 to 19, wherein the battery cells are prismatic cells or pouch cells.

21. An electrical apparatus, comprising the battery pack according to any one of claims 1 to 20.
